# EUROPÄISCHE PATENTSCHRIFT

(11) **EP 2 558 739 B1**
(45) Veröffentlichungstag und Bekanntmachung des Hinweises auf die Patenterteilung: **05.03.2014**
(21) Anmeldenummer: 11713282.9
(22) Anmeldetag: 08.04.2011
(51) Int. Cl.: F16D 11/14

(54) **KOPPLUNGSANORDNUNG**
COUPLING ARRANGEMENT
DISPOSITIF D'ACCOUPLEMENT

(30) Priorität: 17.09.2010 DE 102010045898; 12.04.2010 US 323198 P
(43) Veröffentlichungstag der Anmeldung: 20.02.2013
(73) Patentinhaber: Magna Powertrain AG & Co. KG, 8502 Lannach (AT)
(72) Erfinder: EDER, Klaus, A-8010 Graz (AT); KOHLBÖCK, Markus, A-4901 Ottnang A. H. (AT); QUEHENBERGER, Johannes, A-5753 Saalbach (AT); WEINGARTSHOFER, Reinhard, A-8561 Söding (AT)
(74) Vertreter: Rausch, Gabriele
(86) Internationale Anmeldenummer: PCT/EP2011/055543
(87) Internationale Veröffentlichungsnummer: WO 2011/128273

(56) Entgegenhaltungen:
- EP-A1- 0 510 457
- DE-A1- 2 246 123
- DE-A1- 3 730 889
- DE-A1- 10 334 450
- DE-A1-102007 031 324
- US-A1- 2008 182 693

## Beschreibung

Die vorliegende Erfindung betrifft eine Kopplungsanordnung für einen Antriebsstrang eines Kraftfahrzeugs, mit wenigstens einer Kupplung, die an einer rotierenden Welle angeordnet ist, um die rotierende Welle wahlweise mit einem Antriebselement des Antriebsstrangs zu koppeln, wobei zur Kopplung der rotierenden Welle mit dem Antriebselement ein erstes Kupplungsteil und ein zweites Kupplungsteil durch Versetzen eines der Kupplungsteile entlang der Achse der rotierenden Welle in einen formschlüssigen Eingriff miteinander bringbar sind.

Das an die rotierende Welle anzukoppelnde Antriebselement des Antriebsstrangs kann eine weitere Welle oder ein Getriebeelement sein. Beispielsweise kann bei einer Betätigung der Kupplung eine formschlüssige Verbindung zwischen der rotierenden Welle einerseits und einer Eingangswelle, einer Ausgangswelle, einem Gehäuse oder einem Tellerrad eines Differenzialgetriebes, oder einem Zahnrad eines Winkelgetriebes andererseits bereitgestellt werden.

Derartige Vorrichtungen können beispielsweise in Form so genannter Disconnect-Systeme zur Entkopplung von Teilen des Antriebsstrangs bei einem Kraftfahrzeug mit zuschaltbarem Allradantrieb eingesetzt werden, sodass bei Zweiradantrieb die Verbindung zwischen der Primärachse oder der Antriebseinheit einerseits und der Sekundärachse andererseits zumindest teilweise stillgelegt werden kann. Um also zu verhindern, dass im permanenten Zweiradantriebsmodus nicht benötigte Teile des Antriebsstrangs, insbesondere unnötige Massen, mitbewegt werden, kann durch Ausrücken der Kupplung eine Stilllegung des zu der Sekundärachse führenden Drehmomentübertragungsabschnitts herbeigeführt werden. Alternativ können Kopplungsanordnungen der genannten Art auch dazu eingesetzt werden, bei einem Fahrzeug mit Hybridantrieb während einer elektrischen Betriebsart das Hauptgetriebe vom Verbrennungsmotor zu trennen, um so Leistungsverluste zu vermeiden und die Geräuschbildung zu minimieren. Ebenso kann eine Antriebsstrangentkopplung für einen elektrischen Antrieb an der Sekundärachse vorgesehen werden. Bei den bekannten Systemen werden die Kupplungen entweder mittels eines hydraulischen oder pneumatischen Aktuators oder mittels eines Elektromotors betätigt, d.h. geöffnet oder geschlossen. Generell kann die Drehmomentübertragung von der rotierenden Welle als Eingangselement zu dem genannten Antriebselement des Antriebsstrangs als Ausgangselement, oder in umgekehrter Richtung erfolgen.

Eine Kopplungsanordnung der gattungsgemäßen Art ist aus der DE 10 2009 049 013 A1 bekannt. Bei diesem System ist zur Bewegung eines Schaltelements der Kupplung in Öffnungsrichtung ein Elektromotor vorgesehen, während die Bewegung des Schaltelements in Schließrichtung über ein Federelement realisiert wird. Die DE 22 46 123 A1 zeigt eine Kopplungsanordnung mit einer axial beweglichen Gewindemuffe und zwei hydraulischen Dämfungskammern.

Bei den genannten Anwendungen ist es erwünscht, die auf formschlüssigem Eingriff beruhende Kupplung, beispielsweise Klauenkupplung, mit relativ hoher Geschwindigkeit einzurücken. Dies kann jedoch zu Stößen, Schwingungen und Geräuschen im Antriebsstrang führen, welche vom Fahrer des Kraftfahrzeugs als unangenehm empfunden werden.

Es ist eine Aufgabe der Erfindung, Kopplungsanordnungen der genannten Art in dieser Hinsicht und in ihrem Aufbau zu verbessern.

Die Lösung der Aufgabe erfolgt durch eine Kopplungsanordnung mit den Merkmalen des Anspruchs 1.

Erfindungsgemäß ist eine zwischen dem ersten Kupplungsteil und dem zweiten Kupplungsteil wirkende hydraulische Dämpfungseinrichtung vorgesehen. Die hydraulische Dämpfungseinrichtung beruht darauf, dass bei einem axialen Versetzen des ersten Kupplungsteils relativ zu dem zweiten Kupplungsteil ein Fluid komprimiert und/oder bewegt wird und dadurch die Bewegung des Kupplungsteils kontrolliert verzögert wird. Auf diese Weise können trotz eines schnellen Einrückens unerwünschte Stöße und Geräusche im Antriebsstrang vermieden werden.

Die Richtungsangaben "axial" und "radial" beziehen sich im Zusammenhang mit der vorliegenden Erfindung stets auf die Achse der rotierenden Welle.

Erfindungsgemäß umfasst die hydraulische Dämpfungseinrichtung eine Dämpfungskammer zum Aufnehmen eines hydraulischen Fluids, welche zwei relativ zueinander bewegliche und jeweils mit einem der Kupplungsteile gekoppelte Wandabschnitte aufweist, wobei wenigstens eine Abströmöffnung ein Entweichen des Fluids aus der Dämpfungskammer ermöglicht. Die Wandabschnitte können grundsätzlich direkt an dem jeweiligen Kupplungsteil ausgebildet sein. Sie können aber auch zu separaten Bauteilen gehören, die - gegebenenfalls über mehrere Übertragungselemente - mechanisch mit den Kupplungsteilen in Verbindung stehen. Dadurch dass die Wandabschnitte mit den Kupplungsteilen in mechanischer Verbindung stehen, wird bei einer Bewegung der Kupplungsteile aufeinander zu die Dämpfungskammer verkleinert und das hydraulische Fluid wird demzufolge über die Abströmöffnung aus der Dämpfungskammer herausgedrückt. Aufgrund des gedrosselten Strömens des Fluids von der Dämpfungskammer in einen weiteren Aufnahmebereich wird der Bewegung der Wandabschnitte und somit der Kupplungsteile ein mechanischer Widerstand entgegengesetzt, welcher letztlich zu einer Dämpfung der Einrückbewegung führt. Über die Größe und die Form der Abströmöffnung sowie gegebenenfalls über das Vorsehen mehrerer Abströmöffnungen kann das Ausmaß eingestellt werden, mit welchem das Entweichen des Fluids aus der Dämpfungskammer gedrosselt wird.

Erfindungsgemäß umfasst die Kopplungsanordnung eine Betätigungseinrichtung für die Kupplung, wobei die Dämpfungskammer zwischen zwei Stellgliedern der Betätigungseinrichtung gebildet ist. Auf diese Weise kann beispielsweise ein ohnehin vorhandener Hohlraum zwischen zwei Stellgliedern in vorteilhafter Weise als Dämpfungskammer genutzt werden.

Weiterbildungen der Erfindung sind in den abhängigen Ansprüchen, der Beschreibung sowie den beigefügten Zeichnungen angegeben.

Die Dämpfungskammer kann insbesondere zwischen zwei ringförmigen oder hülsenförmigen Stellgliedern der Betätigungseinrichtung und einem Kupplungsgehäuse gebildet sein. Gemäß einer Ausgestaltung kann die Dämpfungskammer ein Ringraum sein, welcher z.B. um eine zentrale Welle herum ausgebildet ist.

Gemäß einer weiteren Ausgestaltung der Erfindung dient wenigstens ein toleranzbedingter Spalt zwischen zwei Kupplungskomponenten als Abströmöffnung. Dies ermöglicht eine besonders einfache und kostengünstige Konstruktion, da in diesem Fall nicht eigens eine Abströmöffnung in der Wand der Dämpfungskammer vorzusehen ist.

Die Dämpfungskammer kann in einem ausgerückten Zustand der Kupplung nur teilweise mit dem Fluid gefüllt sein. Oberhalb des Fluidspiegels kann sich dann ein Luft- oder Gaspolster ausbilden. Bei einem Einrücken der Kupplung und einem damit verbundenen Verkleinern der Dämpfungskammer wird bei entsprechend positionierter Abströmöffnung zunächst die Luft des Luftpolsters mit relativ geringem Widerstand aus der Dämpfungskammer herausgedrückt. Erst nachdem das Luftpolster aufgebraucht ist, erfolgt durch Abströmen des hydraulischen Fluids aufgrund des erhöhten Widerstands eine relativ starke Dämpfung der Kupplungsteilbewegung. Auf diese Weise kann der Verlauf der Dämpfung während des Ein- oder Ausrückvorgangs genauer angepasst werden.

Gemäß einer weiteren Ausgestaltung der Erfindung steht die Dämpfungskammer in einem ausgerückten Zustand der Kupplung über eine Verbindungsöffnung mit einer Ausgleichskammer in Verbindung. Die Verbindungsöffnung kann derart gestaltet sein, dass sie ein relativ gering gedrosseltes Entweichen des Fluids von der Dämpfungskammer in die Ausgleichskammer ermöglicht, um so das Maß der Dämpfung herabzusetzen.

An einem der Wandabschnitte der Dämpfungskammer kann weiterhin ein Steuerabschnitt vorgesehen sein, welcher einen Verschluss der Verbindungsöffnung herbeiführt, sobald das eine Kupplungsteil bei einem axialen Versetzen in Einrückrichtung eine vorbestimmte Position erreicht. Die vorbestimmte Position definiert somit den Punkt, an welchem die volle Dämpfungskraft einsetzt. Durch einen derartigen, eine Verbindungsöffnung verschließenden Steuerabschnitt kann somit die Dämpfungscharakteristik noch genauer angepasst werden.

Weiterhin kann ein zwischen den beiden Kupplungsteilen wirkendes elastisches Element, insbesondere ein Gummipuffer, vorgesehen sein. Ein derartiges elastisches Element kann zur weiteren Anpassung der Dämpfungscharakteristik herangezogen werden. Insbesondere kann es dazu dienen, die axiale Bewegung des ersten Kupplungsteils relativ zu dem zweiten Kupplungsteil letztendlich zum Stehen zu bringen.

Gemäß einer Ausführungsform der Erfindung ist die Dämpfungseinrichtung derart ausgebildet, dass ein Anschlagen der Stirnflächen der Kupplungsteile gegeneinander beim Einrücken der Kupplung gerade verhindert wird. Hierdurch wird ein besonders sanftes und geräuscharmes Kuppeln ermöglicht.

Gemäß einer weiteren Ausführungsform der Erfindung sind die beiden Kupplungsteile in Einrückrichtung relativ zueinander vorgespannt. Wenn es beim Einrücken der Kupplung zu einer "Zahn-auf-Zahn"-Stellung kommt, kann die kontinuierlich wirkende, z.B. mittels eines Federelements bereitgestellte Vorspannkraft dafür sorgen, dass bei Vorliegen einer Relativdrehung zwischen den beiden Kupplungsteilen ein Einrücken unmittelbar erfolgt, sobald die Kupplungsteile korrekt zueinander ausgerichtet sind. Um hier ein schnelles Einrücken zu gewährleisten, ist im Allgemeinen eine relativ große Vorspannkraft erforderlich. Die damit unweigerlich verbundene Gefahr von Stößen und Vibrationen kann durch eine erfindungsgemäße Dämpfungseinrichtung jedoch vermieden werden.

Die Erfindung wird im Folgenden beispielhaft unter Bezugnahme auf die Zeichnungen beschrieben.
- Fig. 1: ist eine Schnittansicht einer erfindungsgemäßen Kopplungsanordnung.
- Fig. 2: ist eine Explosionsdarstellung, welche die Kopplungsanordnung gemäß Fig. 1 von vorne zeigt.
- Fig. 3: ist eine Explosionsdarstellung, welche die Kopplungsanordnung gemäß Fig. 1 von hinten zeigt.
- Fig. 4: ist eine Rückansicht der Kopplungsanordnung gemäß Fig. 1.
- Fig. 5: ist eine Teildarstellung der Kopplungsanordnung gemäß Fig. 1, welche eine Kupplung der Kopplungsanordnung in einem eingerückten Zustand zeigt.
- Fig. 6: ist eine Teildarstellung der Kopplungsanordnung gemäß Fig. 1, welche die Kupplung in einem ausgerückten Zustand zeigt.
- Fig. 7: ist eine Teildarstellung der Kopplungsanordnung gemäß Fig. 1, welche die Kupplung während eines Einrückvorgangs zeigt und die Lage einer Dämpfungskammer verdeutlicht.
- Fig. 8: zeigt eine Abwicklungsdarstellung eines Rampenmechanismus einer Betätigungseinrichtung der Kopplungsanordnung gemäß Fig. 1.
- Fig. 9A - 9D: zeigen den Rampenmechanismus gemäß Fig. 8 in verschiedenen Betriebszuständen.
- Fig. 10: ist eine Vorderansicht eines Rampenrings, welcher einen Teil des Rampenmechanismus gemäß Fig. 8 bildet.
- Fig. 11: ist eine Rückansicht des Rampenrings gemäß Fig. 10.
- Fig. 12: ist eine Vorderansicht eines Schneckenrads, welches einen Teil des Rampenmechanismus gemäß Fig. 8 bildet.
- Fig. 13: ist eine Rückansicht des Schneckenrads gemäß Fig. 12.
- Fig. 14: ist eine Querschnittansicht der Kopplungsanordnung gemäß Fig. 1, welche das Zusammenwirken zwischen einem Schneckenrad und einem Anschlagstift zeigt.
- Fig. 15: ist eine Rückansicht eines Federrings einer Synchronisiereinrichtung der Kopplungsanordnung gemäß Fig. 1.
- Fig. 16: ist eine Vorderansicht des Federrings gemäß Fig. 15.

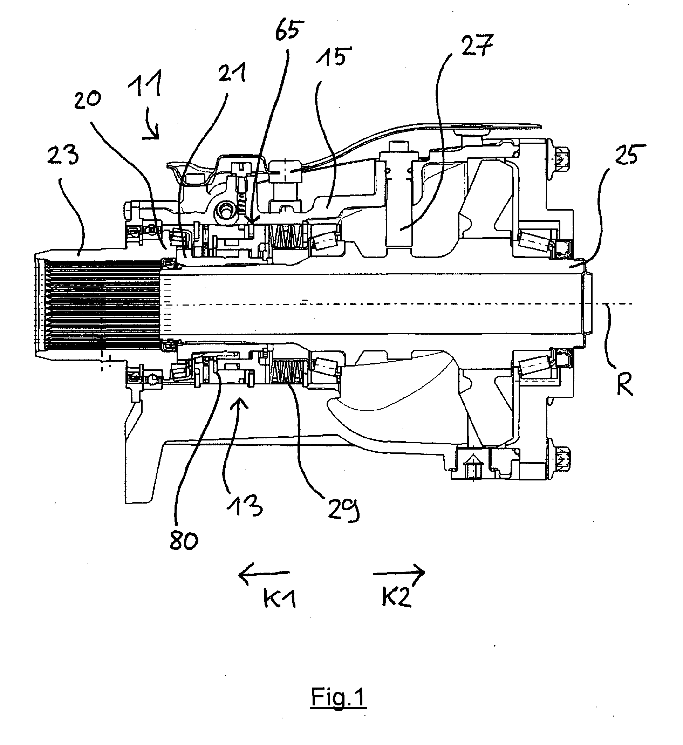

In den Fig. 1-3 ist eine erfindungsgemäße Kopplungsanordnung dargestellt, welche an verschiedenen Positionen innerhalb eines Antriebsstrangs eines Kraftfahrzeugs eingesetzt werden kann, um zwei Komponenten des Antriebsstrangs wahlweise miteinander zu koppeln. Insbesondere kann die Kopplungsanordnung ein longitudinales oder ein transversales Disconnect-System bei einem Kraftfahrzeug mit manuell oder automatisch zuschaltbarem Allradantrieb bilden.

Grundsätzlich ist es auch denkbar, mittels der Kopplungsanordnung einen Verbrennungsmotor vom Primärantriebsstrang zu entkoppeln, um Verluste zu verringern, die sich aus einem Weiterdrehen von Antriebsstrangkomponenten wie Handschalt- oder Automatikgetriebe bei rollendem Fahrzeug oder bei einem Antrieb durch einen Elektromotor an der Sekundärachse ergeben. Ebenso kann die Kopplungsanordnung bei einem Hybridfahrzeug mit Antrieb durch einen Elektromotor an der Sekundärachse dazu verwendet werden, den Elektromotor vom Antriebsstrang zu entkoppeln, wenn dieser nicht benötigt wird oder wenn eine übermäßige Geschwindigkeitserhöhung zu verhindern ist.

Die Kopplungsanordnung umfasst eine Klauenkupplung 11 sowie eine Betätigungseinrichtung 13, welche in einem gemeinsamen Gehäuse 15 untergebracht sind. Die Betätigungseinrichtung 13 ist durch eine nicht dargestellte elektronische Steuereinheit steuerbar.

Die Klauenkupplung 11 umfasst ein erstes Kupplungsteil 20 und ein zweites Kupplungsteil 21, welche zum Schließen der Klauenkupplung 11 in einen formschlüssigen Eingriff bringbar sind. Das erste Kupplungsteil 20 ist mit einer Eingangs-Halbwelle 23 gekoppelt, welche um eine Rotationsachse R rotiert und ihrerseits z.B. mit einem Vorderachsdifferenzial des Kraftfahrzeugs gekoppelt ist. Das zweite Kupplungsteil 21 ist mit einer Ausgangs-Halbwelle 25 gekoppelt, welche ihrerseits z.B. mit einem Hinterachsdifferenzial des Kraftfahrzeugs gekoppelt ist. Wenn sich die beiden Kupplungsteile 20, 21 in formschlüssigem Eingriff befinden, ist die Klauenkupplung 11 eingerückt und es findet eine Drehmomentübertragung von der Eingangs-Halbwelle 23 zu der Ausgangs-Halbwelle 25, also z.B. von der Vorderachse zu der Hinterachse des Antriebsstrangs, statt. Wenn sich die beiden Kupplungsteile 20, 21 hingegen nicht miteinander in Eingriff befinden, ist die Klauenkupplung 11 geöffnet und die Eingangs-Halbwelle 23 ist von der Ausgangs-Halbwelle 25 getrennt. Das Öffnen und Schließen der Klauenkupplung 11 erfolgt, indem das zweite Kupplungsteil 21 entlang der Rotationsachse R relativ zu dem ersten Kupplungsteil 20 versetzt wird.

Ein Drehzahlsensor 27 ist vorgesehen, um die momentane Drehzahl der Ausgangs-Halbwelle 25 zu erfassen. Der Drehzahlsensor 27 kann die Drehzahl entweder mittels eines eigens vorgesehenen Markierungsrades oder anhand der Zahnung von Komponenten der Kopplungsanordnung selbst ermitteln. Insbesondere kann ein ABS-Sensor zum Einsatz kommen.

Mittels einer Feder 29, im dargestellten Ausführungsbeispiel eine Belleville-Feder, ist das zweite Kupplungsteil 21 in Einrück- oder Schließrichtung K1 der Klauenkupplung 11 vorgespannt. Das Spannen der Feder 29 findet bei jedem Ausrücken oder Öffnen der Klauenkupplung 11 statt, wenn das zweite Kupplungsteil 21 entgegen der Federkraft in Ausrück- oder Öffnungsrichtung K2 versetzt wird.

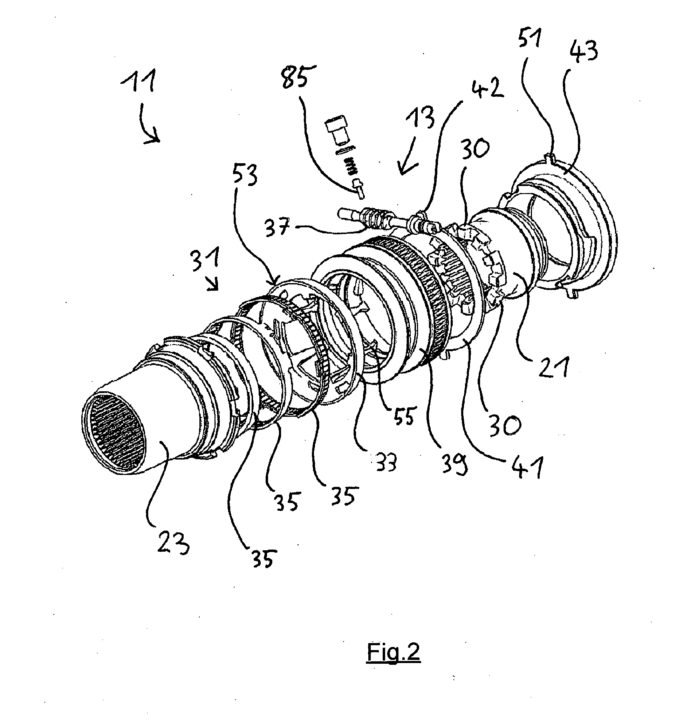

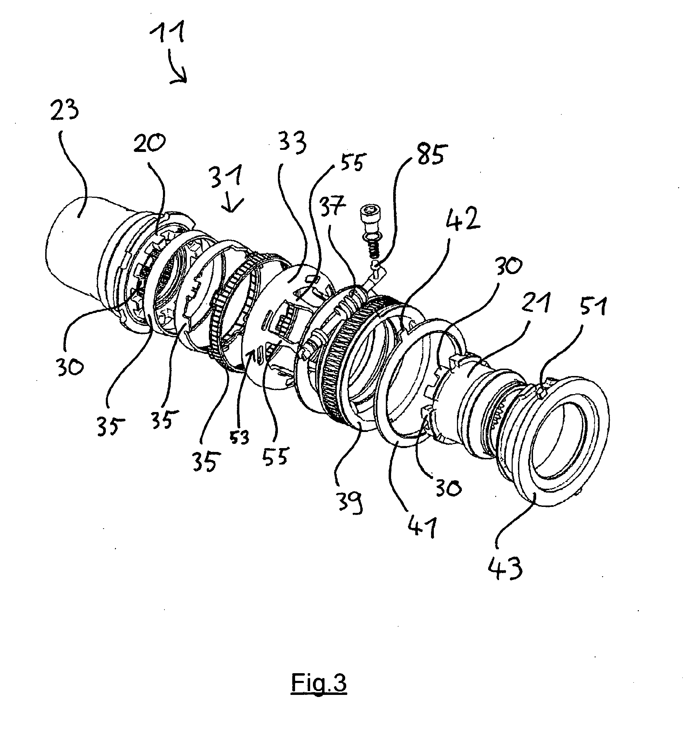

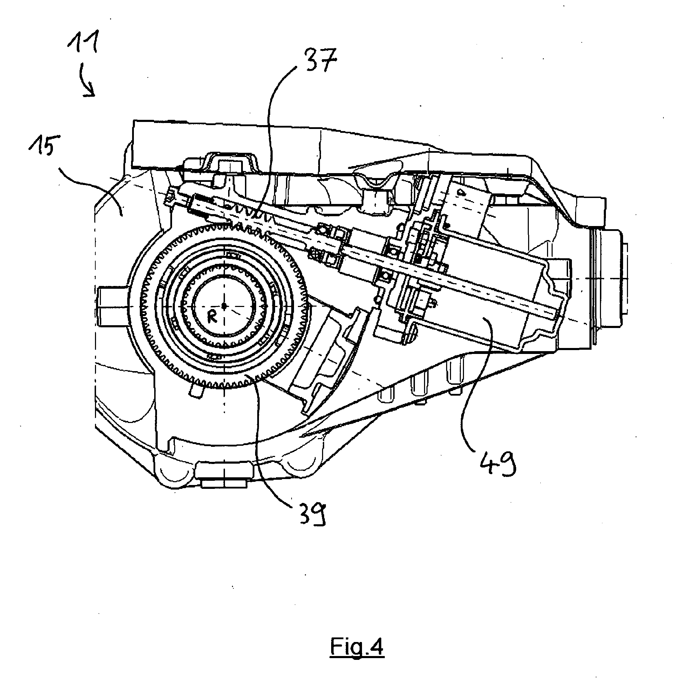

Wie aus den Explosionsdarstellungen gemäß Fig. 2 und 3 hervorgeht, sind die Kupplungsteile 20, 21 hülsenförmig ausgebildet und weisen an ihrer Stirnseite jeweils zahnartige Klauen 30 auf. Zum Angleichen der Drehzahlen der Eingangs-Halbwelle 23 und der Ausgangs-Halbwelle 25 ist eine Synchronisiereinrichtung 31 in die Klauenkupplung 11 integriert, welche einen Federring 33 sowie mehrere Synchronisierringe 35 umfasst. Die Betätigungseinrichtung 13 der Klauenkupplung 11 umfasst eine Schnecke 37, ein mit der Schnecke 37 kämmendes Schneckenrad 39, einen Steuerring 41 mit Fingern 42 sowie einen Rampenring 43. Am Innendurchmesser des Schneckenrads 39 sind zwei Schaltvorsprünge 45 vorgesehen, welche in eine Schaltrampe 47 am Außendurchmesser des Rampenrings 43 eingreifen und in der Lage sind, den Rampenring 43 in beiden axialen Richtungen K1, K2 zu bewegen, wenn das Schneckenrad 39 um die Rotationsachse R gedreht wird, wie nachstehend unter zusätzlicher Bezugnahme auf Fig. 4 näher ausgeführt wird.

Bei einem Verdrehen des Schneckenrads 39 gegenüber dem Rampenring 43 um die Rotationsachse R erfolgt aufgrund des Zusammenwirkens der Schaltvorsprünge 45 und der Schaltrampe 47 ein axiales Versetzen des Rampenrings 43 entlang der Rotationsachse R. Zum Herbeiführen einer derartigen Relativdrehung zwischen dem Schneckenrad 39 und dem Rampenring 43 kann die mit dem Schneckenrad 39 kämmende Schnecke 37 durch einen Elektromotor 49 angetrieben werden. Zum Öffnen der Klauenkupplung 11 wird daher das Schneckenrad 39 mittels des Elektromotors 49 in Drehung versetzt, welches seinerseits den Rampenring 43 entgegen der Kraft der Feder 29 axial versetzt. Das zweite Kupplungsteil 21 wird über einen gleitenden Eingriff mit dem Rampenring 43 mitbewegt.

Das Schneckenrad 39 ist derart gelagert, dass es während des Verdrehens keine axiale Bewegung ausführt. Der Rampenring 43 hingegen ist axial verschiebbar, wobei am Außendurchmesser des Rampenrings 43 vorgesehene Finger 51 in entsprechende nicht dargestellte Nuten des Gehäuses 15 gleitend aufgenommen sind, um so eine Eigendrehung des Rampenrings 43 zu vermeiden.

Die Feder 29 drückt den Rampenring 43 in Schließrichtung K1 gegen das zweite Kupplungsteil 21. Hierdurch wird einerseits der Elektromotor 49 dabei unterstützt, während des Synchronisiervorgangs die Synchronisierringe 35 mit der notwendigen axialen Kraft zu beaufschlagen. Der Rampenring 43 und die mit ihm zusammenwirkenden Schaltvorsprünge 45 - welche grundsätzlich klotz- oder stiftartig geformt sein können - sind daher derart gestaltet, dass die Kraft des Elektromotors 49 und die Kraft der Feder 29 in Kombination auf das zweite Kupplungsteil 21 ausgeübt werden. Andererseits dient die Feder 29 als Kraftspeicher für den eigentlichen Einrückvorgang nach dem Synchronisiervorgang. Wenn nämlich die Klauenkupplung 11 nach dem Synchronisiervorgang eingerückt werden muss, ist das Vorliegen einer "Zahn auf Zahn"-Stellung der Kupplungsteile 20, 21 wahrscheinlich. Die Klauenkupplung 11 kann in diesem Fall nicht einrücken. Es ist demzufolge eine Relativdrehung zwischen dem ersten Kupplungsteil 20 und dem zweiten Kupplungsteil 21 notwendig, um schließlich ein Einrücken zu ermöglichen. Die Feder 29 wirkt dabei solange als Energiespeicher, bis die Kupplungsteile 20, 21 in die korrekte Stellung ("Zahn auf Lücke") gelangt sind.

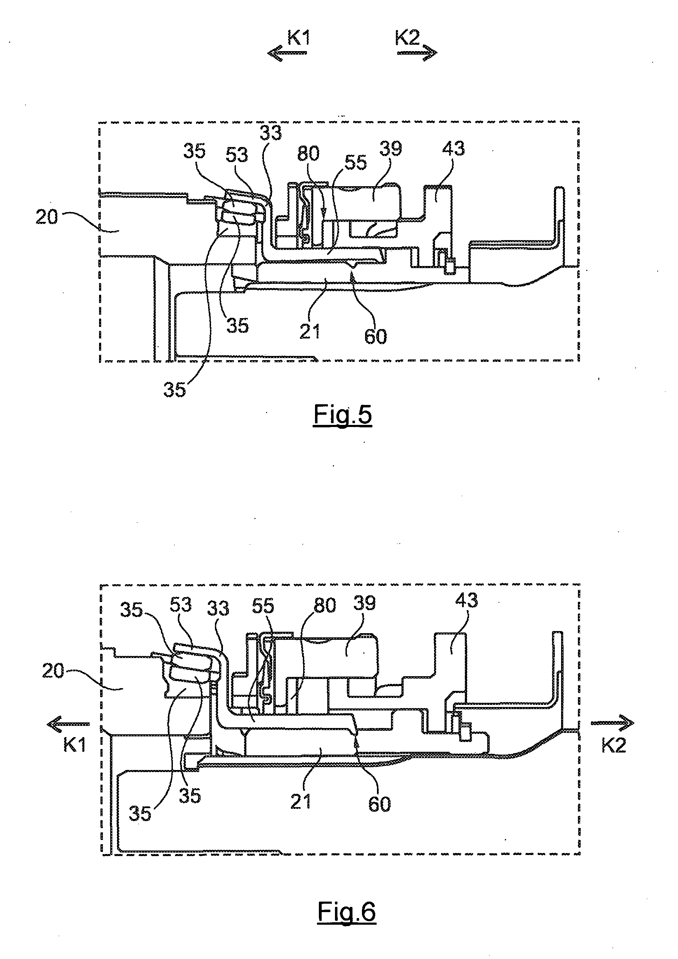

Während des Synchronisiervorgangs drückt gemäß Fig. 5 und 6 das zweite Kupplungsteil 21 gegen den Federring 33, welcher einen hülsenförmigen Grundkörper 53 und mehrere Schnappfinger 55 umfasst. Der Innenumfang des hülsenförmigen Grundkörpers 53 bildet einen äußeren Reibungskegel der Synchronisiereinrichtung 31. In einer Anfangsphase des Synchronisiervorgangs geraten die Schnappfinger 55 des Federrings 33 in Eingriff mit einer am Außenumfang des zweiten Kupplungsteils 21 ausgebildeten Nut 60. Es ist eine definierte Kraft notwendig, um die Schnappfinger 55 des Federrings 33 aus der Nut 60 herauszudrücken. Diese Kraft ist gleich der Maximalkraft zum in Eingriff Bringen der Reibungskegel der Synchronisierringe 35.

Um die korrekte Kraft auf den Federring 33 auszuüben, wird der Elektromotor 49 entsprechend angesteuert. Hierbei kann je nach Anwendung eine positionsbasierte Steuerung, eine strombasierte Steuerung, eine auf der Drehzahl des sekundären Antriebsstrangs beruhende Steuerung oder eine aus diesen Prinzipien kombinierte Steuerstrategie angewendet werden.

Sobald eine Anfangsphase des Synchronisiervorgangs beendet ist und die Drehzahl der Ausgangs-Halbwelle 23 zumindest im Wesentlichen die Drehzahl der Eingangs-Halbwelle 25 erreicht hat, kann der Einrückvorgang der Klauenkupplung 11 beginnen. Die axiale Kraft auf den Rampenring 43 wird erhöht, so dass der Federring 33 aus der Nut 60 des zweiten Kupplungsteils 21 herausgedrückt wird. Der Rampenring 43 drückt das zweite Kupplungsteil 21 weiter entlang der Rotationsachse R in Schließrichtung K1 der Klauenkupplung 11 vorwärts. Je nach der momentanen Stellung der Klauen 30 des ersten Kupplungsteils 20 und des zweiten Kupplungsteils 21 relativ zueinander wird die Klauenkupplung 11 entweder sofort oder nach einer relativ kurzen weiteren Relativdrehung der beiden Kupplungsteile 20, 21 geschlossen. Dieser Zustand ist in Fig. 5 dargestellt. Um die Klauenkupplung 11 wieder zu öffnen, wird das Schneckenrad 39 weitergedreht, so dass die Schaltvorsprünge 45 den Rampenring 43 in die in Fig. 6 dargestellte ausgerückte Position bewegen. In der vollständig geöffneten Position schnappt der Federring 33 wieder in die Nut 60 des zweiten Kupplungsteils 21 ein.

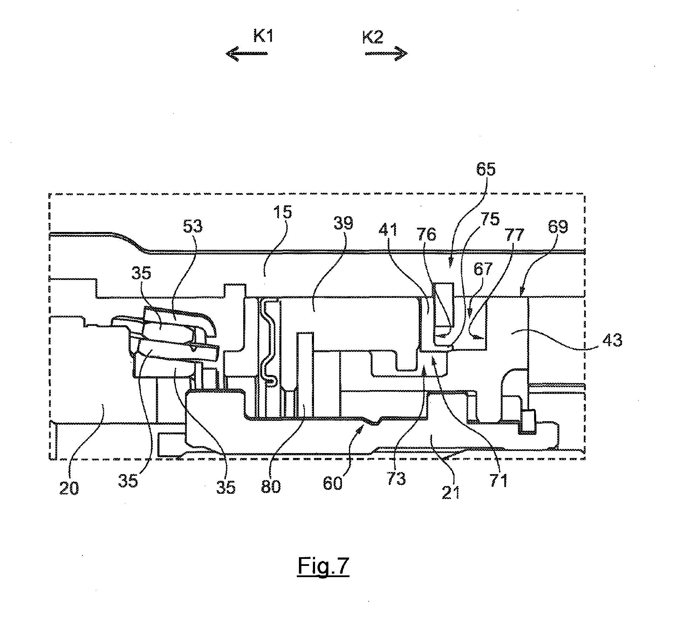

Um ein allzu abruptes Einrücken und insbesondere ein Anschlagen der beiden Kupplungsteile 20, 21 gegeneinander zu vermeiden, ist eine zwischen dem ersten Kupplungsteil 20 und dem zweiten Kupplungsteil 21 wirkende hydraulische Dämpfungseinrichtung 65 vorgesehen, welche nachfolgend unter Bezugnahme auf Fig. 7 genauer beschrieben wird.

Die Dämpfungseinrichtung 65 umfasst eine Dämpfungskammer 67, welche in einem ausgerückten Zustand der Klauenkupplung 11 teilweise mit einem hydraulischen Fluid gefüllt ist, so dass sich oberhalb eines Fluidspiegels ein Luftpolster bildet. Bei dem Fluid kann es sich insbesondere um Hydrauliköl handeln. Die Dämpfungskammer 67 ist zwischen dem Steuerring 41, dem Rampenring 43 sowie dem Gehäuse 15 ausgebildet und bildet daher einen um die Rotationsachse R zentrierten Ringraum. Über toleranzbedingte Spalte 69 zwischen den einzelnen Komponenten kann das Fluid aus der Dämpfungskammer 67 abströmen, falls es unter Druck gesetzt wird. Weiterhin ist eine Verbindungsöffnung 71 vorgesehen, mit welcher die Dämpfungskammer 67 im ausgerückten Zustand der Klauenkupplung 11 mit einer Ausgleichskammer 73 in Verbindung steht. In der in Fig. 7 dargestellten teilweise eingerückten Stellung der Klauenkupplung 11 ist die Verbindungsöffnung 71 durch einen axial von dem Steuerring 41 abstehenden Steuerwandabschnitt 75 verschlossen und die Dämpfungskammer 67 ist vollständig mit dem Fluid gefüllt.

Die Dämpfungskammer 67 ist in radialer Richtung durch feststehende Wandabschnitte des Rampenrings 43 sowie des Gehäuses 15 und in axialer Richtung durch einen stirnseitigen Wandabschnitt 76 des Steuerrings 41 sowie durch einen stirnseitigen Wandabschnitt 77 des Rampenrings 43 begrenzt. Bei einem axialen Versetzen des Rampenrings 43 in Schließrichtung K1 der Klauenkupplung 11 bewegt sich der stirnseitige Wandabschnitt 77 des Rampenrings 43 auf den stirnseitigen Wandabschnitt 76 des Steuerrings 41 zu, so dass das Volumen der Dämpfungskammer 67 kleiner wird. Dies führt dazu, dass zunächst die Luft über dem Fluidspiegel mit einem relativ geringen Widerstand durch die Spalte 69 aus der Dämpfungskammer 67 gedrängt wird. Sobald die Luft aus dem Luftpolster aufgebraucht ist und die Dämpfungskammer 67 wie in Fig. 7 vollständig mit Fluid gefüllt ist, strömt das Fluid gedrosselt aus der Dämpfungskammer 67 heraus, was der Bewegung des Rampenrings 43 einen mechanischen Widerstand entgegensetzt. Die zum Abströmen zur Verfügung stehende Öffnungsfläche ist durch die Toleranzen zwischen dem Schneckenrad 39, dem Steuerring 41, dem Rampenring 43 und dem Gehäuse 15 gegeben. Die Dämpfungscharakteristik kann im Übrigen auch durch die Formgebungen der vorstehend erwähnten axialen Nut für den Finger 51 (Fig. 2) des Rampenrings 43, des Fingers 51 des Rampenrings 43 selbst sowie des Fingers 42 des Steuerrings 41 angepasst werden.

Die Länge des Steuerwandabschnitts 75 des Steuerrings 41 definiert den Punkt, ab welchem die Verbindungsöffnung 71 geschlossen wird und somit die eigentliche hydraulische Dämpfungswirkung einsetzt. Der Steuerwandabschnitt 75 unterbricht bei Erreichen einer vorbestimmten Position während eines axialen Versetzens des zweiten Kupplungsteils 21 in Schließrichtung K1 der Klauenkupplung 11 die Verbindung zwischen der Dämpfungskammer 67 und der Ausgleichskammer 73.

Zusätzlich zu der hydraulischen Dämpfungseinrichtung 65 ist auch ein elastisches Dämpfungselement in Form eines Gummipuffers 80 vorgesehen, welches zwischen dem axial fixierten Schneckenrad 39 und dem Rampenring 43 eingesetzt ist. Der Gummipuffer 80 wird dazu verwendet, die axiale Bewegung des Rampenrings 43 in Schließrichtung K1 zu beenden. Die Kombination der beiden Dämpfungsmechanismen - der hydraulischen Dämpfungseinrichtung 65 sowie des Gummipuffers 80 - dient dazu, ein Anschlagen der Kupplungsteile 20, 21 gegeneinander beim Einrücken gerade zu verhindern. Die Einrückbewegung wird also gestoppt, kurz bevor sich die Kupplungsteile 20, 21 berühren, so dass also ein direkter Kontakt zwischen den Kupplungsteilen 20, 21 in axialer Richtung und somit ein unerwünschter Stoß vermieden wird.

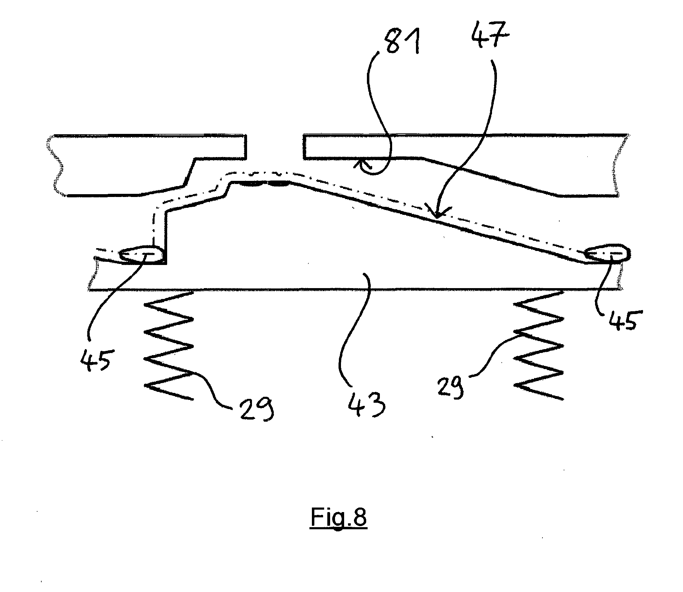

Unter Bezugnahme auf die Fig. 8 bis 13 wird nun der durch das Zusammenwirken der Schaltvorsprünge 45 und der Schaltrampe 47 gebildete Rampenmechanismus genauer beschrieben. Fig. 8 zeigt eine abgewickelte Darstellung der Schaltrampe 47 des Rampenrings 43 in der eingerückten Stellung der Klauenkupplung 11. Es ist zu beachten, dass nur 180° der Schaltrampe 47 gezeigt sind. Zur Ausübung einer symmetrischen Kraft sind zwei Schaltvorsprünge 45 vorgesehen und die Steuerkurve der Schaltrampe 47 wiederholt sich nach 180°. Die Anzahl der Schaltvorsprünge 45 ist jedoch im Allgemeinen nicht auf zwei beschränkt. Der Rampenring 43 bewegt sich während des Einrückens der Klauenkupplung 11 in axialer Richtung. Wenn sich der Rampenring 43 gemäß Fig. 8 nach oben bewegt, wird die Klauenkupplung 11 geschlossen und wenn sich der Rampenring 43 gemäß Fig. 8 nach unten bewegt, wird die Klauenkupplung 11 geöffnet. Wie vorstehend erwähnt dreht sich das Schneckenrad 39 mit den Schaltvorsprüngen 45 um die Rotationsachse R, bewegt sich aber nicht in axialer Richtung. Um die Hertzsche Pressung zu verringern, werden Schaltvorsprünge 45 mit ebenen Oberflächen oder mit Oberflächen von großem Krümmungsradius verwendet. Die Schaltvorsprünge 45 sind unterhalb des Schneckenrads 39 angeordnet, um eine möglichst kleine Bauform der Kopplungsanordnung zu erreichen. Zu dem gleichen Zweck ist das zweite Kupplungsteil 21 unterhalb des Rampenrings 43 und des Schneckenrads 39 angeordnet.

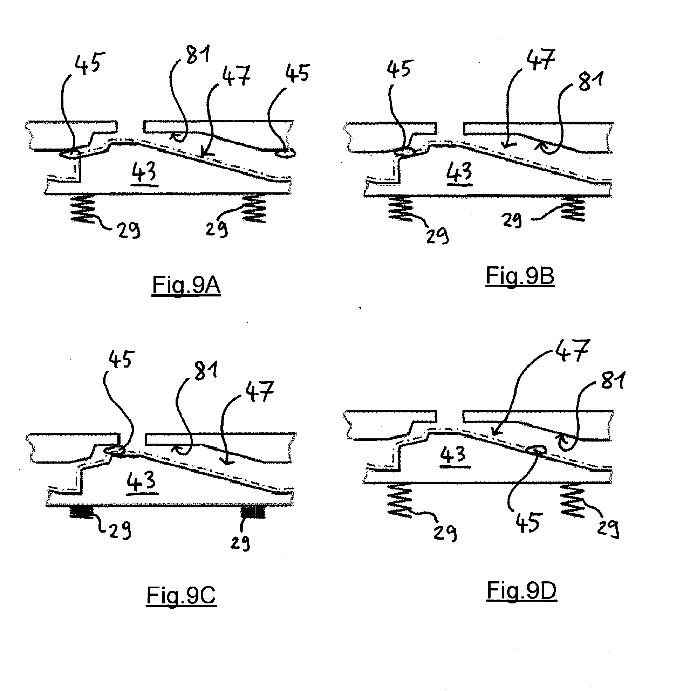

Unter Bezugnahme auf die Fig. 9A bis 9D werden nun verschiedene Betriebszustände des Rampenmechanismus beschrieben. Fig. 9A zeigt den Rampenmechanismus bei einer "Zahn auf Zahn"-Stellung der beiden Kupplungsteile 20, 21. Der Rampenring 43 wird durch die Feder 29 in die Schließposition gedrückt, aber von den Kupplungsteilen 20, 21 an einer weiteren Bewegung in Schließrichtung K1 gehindert. Die Schaltrampe 47 ist derart gestaltet, dass die Schaltvorsprünge 45 nicht gestützt werden. Somit ist es dem Rampenring 43 und dem zweiten Kupplungsteil 21 ermöglicht, sich sobald als möglich zu bewegen, wenn die Kupplungsteile 20, 21 in eine "Zahn auf Lücke"-Stellung gelangen.

Fig. 9B zeigt den Rampenmechanismus während des Synchronisiervorgangs. Der Rampenring 43 wird durch die Feder 29 in Schließrichtung K1 gedrückt und in Abhängigkeit von der Gegenkraft auch von dem Federring 33 weggedrückt. Dies ist die einzige Position, an der die Oberseite 81 der Schaltrampe 47 erforderlich ist. Der Rampenring 43 ist direkt durch das Schneckenrad 39 zwangspositioniert. Um die erforderliche Kraft zum Drücken des Federrings 33 aus der Nut 60 zu erreichen, liegen die Beträge der Federkräfte des Federrings 33 und der Feder 29 in der gleichen Größenordnung.

Fig. 9C zeigt den Rampenmechanismus in der Öffnungsstellung der Klauenkupplung 11. Die Schaltvorsprünge 45 befinden sich an der höchsten Stelle der Schaltrampe 47. Um durch das erforderliche durch die Reibungskegel der Synchronisierringe 35 definierte Spiel hindurchzugelangen und die Synchronisierposition schneller zu erreichen, kann ein kurzer Abschnitt der Schaltrampe 47 einen steileren Verlauf aufweisen.

Fig. 9D zeigt den Rampenmechanismus während des Öffnens der Klauenkupplung 11. Der Rampenring 43 wird gegen die Kraft der Feder 29 in Öffnungsrichtung K2 der Klauenkupplung 11 bewegt. Diese Phase, während der die Feder 29 für den nächsten Synchronisiervorgang gespannt wird, ist im Gegensatz zum Einrückvorgang nicht zeitkritisch.

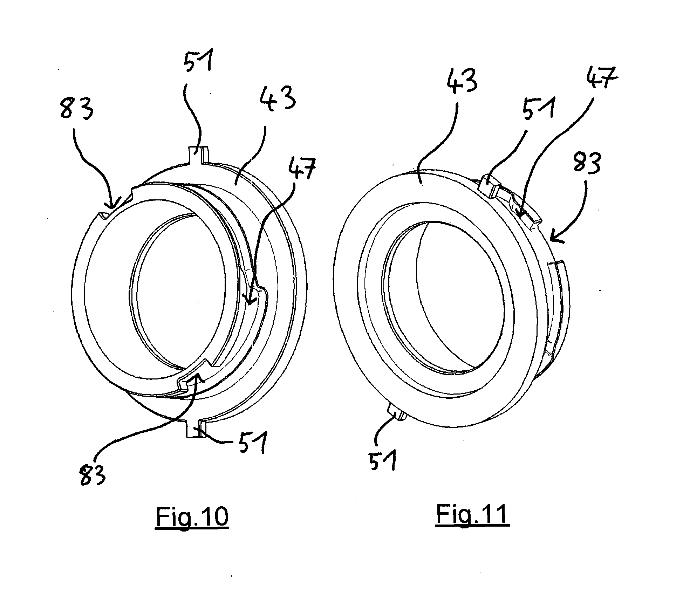

Wie aus den Ansichten des Rampenrings 43 gemäß Fig. 10 und 11 hervorgeht, weist die Schaltrampe 47 für Montagezwecke zwei Öffnungen 83 auf, so dass die Schaltvorsprünge 45 des Schneckenrads 39 leicht in die Schaltrampe 47 eingesetzt werden können.

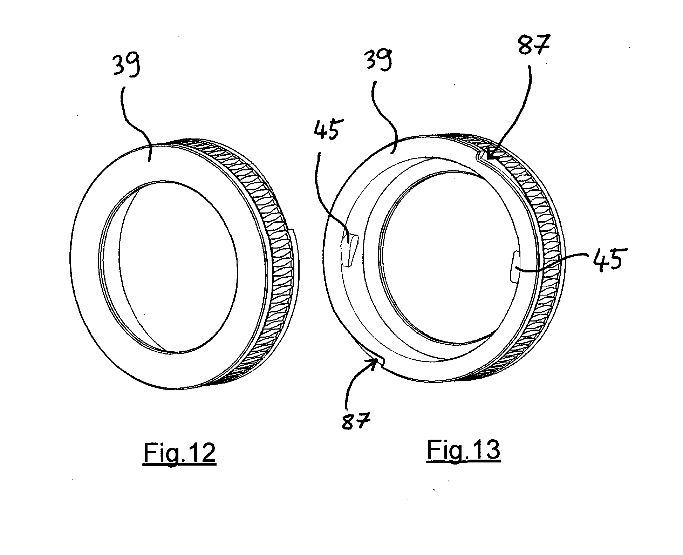

Der Elektromotor 49 (Fig. 4) verwendet einen Hall-Effekt-Sensor (nicht dargestellt), um die Position des Schneckenrads 39 zu steuern. Da ein derartiger Hall-Effekt-Sensor lediglich Positionsänderungen erfassen kann, müssen Maßnahmen zum Definieren eines Nullpunkts oder Anfangswerts beim Initialisieren des zugehörigen Steuergeräts vorgesehen sein. Unter Bezugnahme auf die Fig. 12 bis 14 wird nun ein Kalibriermechanismus zum Auffinden eines Anfangswerts für den Hall-Effekt-Sensor beschrieben. Es sind zwei unterschiedliche Prinzipien zum Durchführen der Kalibrierung möglich.

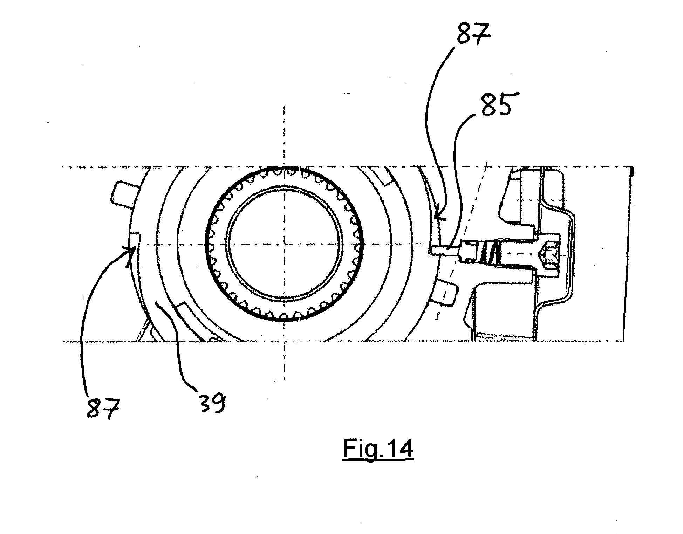

Zum einen kann ein fester Anschlag vorgesehen sein, welcher beim Zurückdrehen des Schneckenrads 39 entsprechend einem Ausrücken der Klauenkupplung 11 die Drehbewegung des Schneckenrades 39 stoppt. Bei dem dargestellten Ausführungsbeispiel wird als Anschlag ein federvorgespannter Stift 85 (Fig. 14) verwendet, welcher beim Zurückdrehen des Schneckenrads 39 in eine Ausnehmung 87 gelangt und bei Erreichen deren Endbegrenzung eine weitere Drehung des Schneckenrads 39 blockiert. Ein Drehen des Schneckenrads 39 in der entgegengesetzten Richtung für ein erneutes Einrücken der Klauenkupplung 11 ist jedoch aufgrund der Gestaltung der Ausnehmung 87 ohne weiteres möglich.

Zum anderen könnten gemäß einer nicht dargestellten Ausführungsform Rastkerben an den gleitenden Oberflächen der Schaltvorsprünge 45 und/oder der Schaltrampe 47 vorgesehen sein, um geringfügige Drehmomentimpulse am Elektromotor 49 hervorzurufen, welche durch das zugehörige Steuergerät als Stromspitzen erkannt werden können. Diese Stromspitzen können dann durch eine Steuerlogik ausgewertet werden, um die tatsächliche Position des Schneckenrads 39 zu berechnen.

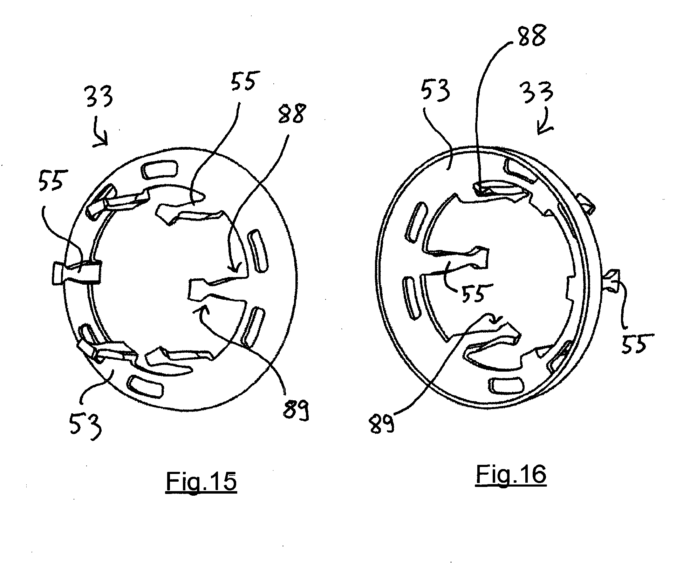

Unter Bezugnahme auf die Fig. 15 und 16 wird nun die Gestaltung des Federrings 33 genauer beschrieben. Die zum Einrasten in die Nut 60 vorgesehenen Schnappfinger 55 weisen eine Federwirkung auf, so dass sie in Abhängigkeit von der Querschnittsform der Nut 60 aus dieser herausgedrückt werden. Das Vorsehen mehrerer Schnappfinger 55 ermöglicht eine erhöhte Gesamtkraft. Das am äußeren Reibungskegel des Grundkörpers 53 auftretende Synchronisierdrehmoment, welches einem Beschleunigen des sekundären Antriebsstrangs dient, wird durch die zwischen den Klauen 30 des zweiten Kupplungsteils 21 befindlichen Anfangsabschnitte 88 der Schnappfinger 55 gestützt. Die Schnappfinger 55 sind zunächst hinsichtlich ihrer Höhe und/oder ihrer Breite auf die jeweiligen Endabschnitte 89 zu verjüngt, so dass die Materialbelastung über die Länge der Schnappfinger 55 konstant ist. Die Endabschnitte 89 der Schnappfinger 55 selbst sind jedoch wiederum verbreitert, so dass die Kontaktbelastung abnimmt. Der Querschnitt der Nut 60 (Fig. 5) weist einen V-förmigen Verlauf mit vorbestimmtem Winkel auf, im dargestellten Beispiel 60°, um eine definierte Axialkraft zum Herausdrücken der Schnappfinger 55 aus der Nut 60 zu erzeugen. Der Federring 33 ist derart gestaltet, dass er leicht durch Stanz- und Biegeprozesse mit Biegungen um etwa 90° aus einem Blechteil herstellbar ist. Die Nut 60 fixiert den äußeren Reibungskegel des Federrings 33 auch in der geöffneten Stellung der Klauenkupplung, um Schleppverluste in der Synchronisiereinrichtung 31 zu vermeiden. Damit unmittelbar eine Axialkraft für eine Bewegung des Federrings 33 in axialer Richtung zur Verfügung steht, weist der Federring 33 eine dementsprechende Vorspannung auf, wenn er sich in der Nut 60 befindet.

Insgesamt weist die Betätigungseinrichtung 13 eine koaxiale Konstruktion auf, wodurch sie sehr kompakt ist. Insbesondere ist keine Schaltgabel oder eine ähnliche Komponente erforderlich, wie sie üblicherweise bei Handschaltgetrieben, Automatikgetrieben oder Drehmomentwandlern vorgesehen ist. Der Federring 33 befindet sich unterhalb des Rampenrings 43 und der Rampenring 43 befindet sich unterhalb des Schneckenrads 39. Dadurch ist die axiale Länge der Gesamtanordnung relativ gering. Das komplette System weist - mit Ausnahme der Schnecke 37 und des Elektromotors 49 - eine rohrähnliche Form auf. Die Erfindung ermöglicht somit eine besonders kompakte Bauform sowie relativ geringe Herstellungskosten für eine Kopplungsanordnung in einem Antriebsstrang.

### Bezugszeichenliste

- 11: Klauenkupplung
- 13: Betätigungseinrichtung
- 15: Gehäuse
- 20: erstes Kupplungsteil
- 21: zweites Kupplungsteil
- 23: Eingangs-Halbwelle
- 25: Ausgangs-Halbwelle
- 27: Drehzahlsensor
- 29: Feder
- 30: Klauen
- 31: Synchronisiereinrichtung
- 33: Federring
- 35: Synchronisierring
- 37: Schnecke
- 39: Schneckenrad
- 41: Steuerring
- 42: Finger
- 43: Rampenring
- 45: Schaltvorsprung
- 47: Schaltrampe
- 49: Elektromotor
- 82: Anschlagstift
- 51: Finger
- 53: Grundkörper
- 55: Schnappfinger
- 60: Nut
- 65: Dämpfungseinrichtung
- 67: Dämpfungskammer
- 69: Spalt
- 71: Verbindungsöffnung
- 73: Ausgleichskammer
- 75: Steuerwandabschnitt
- 76: stirnseitiger Wandabschnitt des Steuerrings
- 77: stirnseitiger Wandabschnitt des Rampenrings
- 80: Gummipuffer
- 81: Oberseite der Schaltrampe
- 83: Öffnung
- 85: Stift
- 87: Ausnehmung
- 88: Anfangsabschnitt
- 89: Endabschnitt
- R: Rotationsachse
- K1: Schließrichtung
- K2: Öffnungsrichtung

## Patentansprüche

1. Kopplungsanordnung für einen Antriebsstrang eines Kraftfahrzeugs, mit wenigstens einer Kupplung (11), die an einer rotierenden Welle (23) angeordnet ist, um die rotierende Welle (23) wahlweise mit einem Antriebselement (25) des Antriebsstrangs zu koppeln, wobei zur Kopplung der rotierenden Welle (23) mit dem Antriebselement (25) ein erstes Kupplungsteil (20) und ein zweites Kupplungsteil (21) durch Versetzen eines der Kupplungsteile (20, 21) entlang der Achse (R) der rotierenden Welle (23) in einen formschlüssigen Eingriff miteinander bringbar sind, wobei
eine zwischen dem ersten Kupplungsteil (20) und dem zweiten Kupplungsteil (21) wirkende hydraulische Dämpfungseinrichtung (65) vorgesehen ist,
**dadurch gekennzeichnet,**
**dass** die hydraulische Dämpfungseinrichtung (65) eine Dämpfungskammer (67) zum Aufnehmen eines hydraulischen Fluids umfasst, welche zwei relativ zueinander bewegliche und jeweils mit einem der Kupplungsteile (20, 21) gekoppelte Wandabschnitte (76, 77) aufweist, wobei wenigstens eine Abströmöffnung ein Entweichen des Fluids aus der Dämpfungskammer (67) ermöglicht, und wobei die Kopplungsanordnung eine Betätigungseinrichtung (13) für die Kupplung (11) umfasst, wobei die Dämpfungskammer (67) zwischen zwei Stellgliedern (39,43) der Betätigungseinrichtung (13) gebildet ist.

2. Kopplungsanordnung nach Anspruch 1,
**dadurch gekennzeichnet,**
**dass** die Dämpfungskammer (67) zwischen zwei ringförmigen oder hülsenförmigen Stellgliedern (39, 43) der Betätigungseinrichtung (13) und einem Kupplungsgehäuse (15) gebildet ist.

3. Kopplungsanordnung nach zumindest einem der Ansprüche 1 oder 2,
**dadurch gekennzeichnet,**
**dass** wenigstens ein toleranzbedingter Spalt zwischen zwei Kupplungskomponenten als Abströmöffnung dient.

4. Kopplungsanordnung nach zumindest einem Ansprüche 1 bis 3,
**dadurch gekennzeichnet,**
**dass** die Dämpfungskammer (67) in einem ausgerückten Zustand der Kupplung (11) nur teilweise mit dem Fluid gefüllt ist.

5. Kopplungsanordnung nach zumindest einem der Ansprüche 1 bis 4,
**dadurch gekennzeichnet,**
**dass** die Dämpfungskammer (67) in einem ausgerückten Zustand der Kupplung (11) über eine Verbindungsöffnung (71) mit einer Ausgleichskammer (73) in Verbindung steht.

6. Kopplungsanordnung nach Anspruch 5,
**dadurch gekennzeichnet,**
**dass** an einem der Wandabschnitte (76, 77) der Dämpfungskammer (67) ein Steuerabschnitt (75) vorgesehen ist, welcher einen Verschluss der Verbindungsöffnung (71) herbeiführt, sobald das eine Kupplungsteil (21) bei einem axialen Versetzen in Einrückrichtung (KI) eine vorbestimmte Position erreicht.

7. Kopplungsanordnung nach zumindest einem der vorstehenden Ansprüche,
**dadurch gekennzeichnet,**
**dass** ferner ein zwischen den beiden Kupplungsteilen (20, 21) wirkendes elastisches Element (80), insbesondere ein Gummipuffer, vorgesehen ist.

8. Kopplungsanordnung nach zumindest einem der vorstehenden Ansprüche,
**dadurch gekennzeichnet,**
**dass** die Dämpfungseinrichtung (65) derart ausgebildet ist, dass ein Anschlagen der Stirnflächen der Kupplungsteile (20, 21) gegeneinander beim Einrücken der Kupplung (11) gerade verhindert wird.

9. Kopplungsanordnung nach zumindest einem der vorstehenden Ansprüche,
**dadurch gekennzeichnet,**
**dass** die beiden Kupplungsteile (20, 21) in Einrückrichtung relativ zueinander vorgespannt sind.

## Claims

1. Coupling arrangement for a drive train of a motor vehicle, having at least one clutch (11) which is arranged on a rotating shaft (23), in order to couple the rotating shaft (23) optionally to a drive element (25) of the drive train, it being possible, in order to couple the rotating shaft (23) to the drive element (25), for a first clutch part (20) and a second clutch part (21) to be brought into a positively locking engagement with one another by one of the clutch parts (20, 21) being shifted along the axis (R) of the rotating shaft (23), a hydraulic damping device (65) which acts between the first clutch part (20) and the second clutch part (21) being provided, **characterized in that** the hydraulic damping device (65) comprises a damping chamber (67) for receiving a hydraulic fluid, which damping chamber (67) has two wall sections (76, 77) which can be moved relative to one another and are coupled in each case to one of the clutch parts (20, 21), at least one outflow opening making it possible for the fluid to escape from the damping chamber (67), and the coupling arrangement comprising an actuating device (13) for the clutch (11), the damping chamber (67) being formed between two actuators (39, 43) of the actuating device (13).

2. Coupling arrangement according to Claim 1, **characterized in that** the damping chamber (67) is formed between two annular or sleeve-shaped actuators (39, 43) of the actuating device (13) and a clutch housing (15).

3. Coupling arrangement according at least to either of Claims 1 and 2, **characterized in that** at least one tolerance-induced gap between two clutch components serves as outflow opening.

4. Coupling arrangement according to at least one of Claims 1 to 3, **characterized in that** the damping chamber (67) is filled only partially with the fluid in a disengaged state of the clutch (11).

5. Coupling arrangement according to at least one of Claims 1 to 4, **characterized in that** the damping chamber (67) is connected via a connecting opening (71) to an equalization chamber (73) in a disengaged state of the clutch (11).

6. Coupling arrangement according to Claim 5, **characterized in that** a control section (75) is provided on one of the wall sections (76, 77) of the damping chamber (67), which control section (75) brings about a closure of the connecting opening (71) as soon as one clutch part (21) reaches a predefined position during axial shifting in the engagement direction (K1).

7. Coupling arrangement according to at least one of the preceding claims, **characterized in that**, furthermore, an elastic element (80), in particular a rubber buffer, which acts between the two clutch parts (20, 21) is provided.

8. Coupling arrangement according to at least one of the preceding claims, **characterized in that** the damping device (65) is configured in such a way that an impact of the end faces of the clutch parts (20, 21) against one another during engagement of the clutch (11) is just prevented.

9. Coupling arrangement according to at least one of the preceding claims, **characterized in that** the two clutch parts (20, 21) are prestressed relative to one another in the engagement direction.

## Revendications

1. Agencement d'accouplement pour une chaîne cinématique de véhicule automobile, comprenant au moins un embrayage (11) qui est disposé sur un arbre rotatif (23) afin d'accoupler l'arbre rotatif (23) de manière sélective à un élément d'entraînement (25) de la chaîne cinématique, une première partie d'embrayage (20) et une deuxième partie d'embrayage (21) pouvant être amenées en prise l'une avec l'autre par engagement positif pour l'accouplement de l'arbre rotatif (23) à l'élément d'entraînement (25) par déplacement de l'une des parties d'embrayage (20, 21) le long de l'axe (R) de l'arbre rotatif (23), un dispositif d'amortissement hydraulique (65) agissant entre la première partie d'embrayage (20) et la deuxième partie d'embrayage (21) étant prévu,
**caractérisé en ce que** le dispositif d'amortissement hydraulique (65) comprend une chambre d'amortissement (67) pour recevoir un fluide hydraulique, laquelle présente deux portions de paroi (76, 77) déplaçables l'une par rapport à l'autre et accouplées respectivement à l'une des parties d'embrayage (20, 21), au moins une ouverture d'écoulement permettant un échappement du fluide hors de la chambre d'amortissement (67) et l'agencement d'accouplement comprenant un dispositif d'actionnement (13) pour l'embrayage (11), la chambre d'amortissement (67) étant formée entre deux actionneurs (39, 43) du dispositif d'actionnement (13).

2. Agencement d'accouplement selon la revendication 1,
**caractérisé en ce que**
la chambre d'amortissement (67) est formée entre deux actionneurs de forme annulaire ou en forme de douille (39, 43) du dispositif d'actionnement (13) et un boîtier d'embrayage (15).

3. Agencement d'accouplement selon au moins l'une quelconque des revendications 1 ou 2,
**caractérisé en ce**
**qu'**au moins une fente due aux tolérances sert d'ouverture d'écoulement entre deux composants d'embrayage.

4. Agencement d'accouplement selon au moins l'une quelconque des revendications 1 à 3,
**caractérisé en ce que**
la chambre d'amortissement (67), dans un état débrayé de l'embrayage (11), n'est que partiellement remplie de fluide.

5. Agencement d'accouplement selon au moins l'une quelconque des revendications 1 à 4,
**caractérisé en ce que**
la chambre d'amortissement (67), dans un état débrayé de l'embrayage (11), est en liaison par le biais d'une ouverture de liaison (71) avec une chambre de compensation (73).

6. Agencement d'accouplement selon la revendication 5,
**caractérisé en ce**
**qu'**une portion de commande (75) est prévue au niveau de l'une des portions de paroi (76, 77) de la chambre d'amortissement (67), laquelle portion de commande entraîne une fermeture de l'ouverture de liaison (71) dès que l'une des parties d'embrayage (21), dans le cas d'un déplacement axial dans la direction d'embrayage (KI), atteint une position prédéterminée.

7. Agencement d'accouplement selon au moins l'une quelconque des revendications précédentes,
**caractérisé en ce**
**qu'**il est en outre prévu un élément élastique (80) agissant entre les deux parties d'embrayage (20, 21), notamment un tampon en caoutchouc.

8. Agencement d'accouplement selon au moins l'une quelconque des revendications précédentes,
**caractérisé en ce que**
le dispositif d'amortissement (65) est réalisé de telle sorte qu'une butée l'une contre l'autre des faces frontales des parties d'embrayage (20, 21) lors de l'embrayage de l'embrayage (11) soit effectivement évitée.

9. Agencement d'accouplement selon au moins l'une quelconque des revendications précédentes,
**caractérisé en ce que**
les deux parties d'embrayage (20, 21) sont précontraintes l'une par rapport à l'autre dans la direction d'embrayage.
